(19) **Europäisches Patentamt European Patent Office Office européen des brevets**

(11) **EP 4 503 577 A1**

(12) **EUROPEAN PATENT APPLICATION**
published in accordance with Art. 153(4) EPC

(43) Date of publication:
05.02.2025 Bulletin 2025/06

(21) Application number: 22939880.5

(22) Date of filing: 28.11.2022

(51) International Patent Classification (IPC):
*H04L 67/10* (2022.01)

(52) Cooperative Patent Classification (CPC):
H04L 67/10; H04L 67/566; H04L 67/61

(86) International application number:
PCT/CN2022/134682

(87) International publication number:
WO 2023/207065 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.04.2022 CN 202210451785

(71) Applicant: Huawei Cloud Computing
Technologies Co., Ltd.
Gui'an New District, Guizhou 550025 (CN)

(72) Inventors:
• CAO, Hanping
Gui'an New District Guizhou 550025 (CN)
• GONG, Xiaowei
Gui'an New District Guizhou 550025 (CN)
• LIU, Wanlai
Gui'an New District Guizhou 550025 (CN)

(74) Representative: Gill Jennings & Every LLP
The Broadgate Tower
20 Primrose Street
London EC2A 2ES (GB)

(54) **CLOUD SERVICE INTEGRATION METHOD AND APPARATUS AND RELATED DEVICE**

(57) This application provides a cloud service integration method. Specifically, a cloud service integration apparatus obtains an identity of a source cloud service, an identity of a destination cloud service, and an integration relationship that are specified by a user, where the integration relationship is used to restrict data communication between the source cloud service and the destination cloud service; determines a target integration rule from a plurality of integration rules based on the identity of the source cloud service, the identity of the destination cloud service, and the integration relationship; and when the target integration rule indicates that the integration relationship is not applicable to the source cloud service and the destination cloud service, provides first prompt information that is to be presented to the user. This can lower a requirement on a technical level of the user for design of a cloud integration architecture, and reduce time consumed to design the cloud integration architecture because there is no need for the user to learn a large quantity of cloud services and integration relationships in depth, thereby improving development efficiency. In addition, this application further provides a corresponding apparatus and a related device.

FIG. 2

## Description

This application claims priority to Chinese Patent Application No. 202210451785.9, filed with the China National Intellectual Property Administration on April 26, 2022 and entitled "CLOUD SERVICE INTEGRATION METHOD AND APPARATUS, AND RELATED DEVICE", which is incorporated herein by reference in its entirety.

## TECHNICAL FIELD

This application relates to the field of cloud processing technologies, and in particular, to a cloud service integration method and apparatus, and a related device.

## BACKGROUND

With flourishing development of cloud computing, enterprise cloudification has become a mainstream trend. During enterprise cloudification, a cloud integration architecture is usually designed, to implement enterprise cloudification, cloud use, and cloud management. The cloud integration architecture is an architecture form used to describe an integration relationship between different cloud services (or components). In addition, advantages and disadvantages of the cloud integration architecture usually directly affect effect of enterprise cloudification, cloud use, and cloud management.

During actual application, a cloud integration architecture usually includes rich cloud services, and there are a large quantity of types of integration relationships between a plurality of cloud services. This requires a user (for example, a designer) to have a sufficient understanding of cloud services and integration rules between the cloud services during design of the cloud integration architecture, so as to design a high-quality cloud integration architecture. This imposes a high requirement on a technical level of the user, and causes low efficiency in designing the cloud integration architecture because the user needs to learn a large quantity of cloud services and integration relationships.

## SUMMARY

This application provides a cloud service integration method, to help a user determine an applicability degree between an integration relationship and different cloud services, so as to improve efficiency in designing a cloud integration architecture by the user, and lower a requirement on a technical level of the user. In addition, this application further provides a cloud service integration apparatus, a computing device cluster, a computer-readable storage medium, and a computer program product.

According to a first aspect, this application provides a cloud service integration method. Specifically, a cloud service integration apparatus obtains an identity of a source cloud service, an identity of a destination cloud service, and an integration relationship that are specified by a user, where the integration relationship is used to restrict data communication between the source cloud service and the destination cloud service, for example, indicates, when the integration relationship is incremental data synchronization, the source cloud service to synchronize incremental data to the destination cloud service. Then, the cloud service integration apparatus determines a target integration rule from a plurality of integration rules based on the identity of the source cloud service, the identity of the destination cloud service, and the integration relationship, and when the target integration rule indicates that the integration relationship is not applicable to the source cloud service and the destination cloud service, provides first prompt information that is to be presented to the user, so that the user can adjust the integration relationship between the source cloud service and the destination cloud service based on the first prompt information.

In this way, when developing a cloud integration architecture, the user can determine, by using the cloud service integration apparatus, whether the designed integration relationship is applicable to the two cloud services, without a need for human determining by learning a plurality of cloud services and integration relationships. This can lower a requirement on a technical level of the user for design of the cloud integration architecture, and reduce time consumed to design the cloud integration architecture because there is no need for the user to learn a large quantity of cloud services and integration relationships in depth, thereby improving development efficiency.

In a possible implementation, when obtaining the identity of the source cloud service, the identity of the destination cloud service, and the integration relationship that are specified by the user, the cloud service integration apparatus may specifically provide an input interface that is to be presented to the user, for example, provide the input interface to a client on a user side, where the input interface includes icons of a plurality of cloud services. Then, in response to a select operation performed by the user on the icons of the plurality of cloud services in the input interface, the cloud service integration apparatus determines the identity of the source cloud service and the identity of the destination cloud service that are specified by the user, and in response to an input operation performed by the user on the integration relationship in the input interface, the cloud service integration apparatus determines the integration relationship input by the user. In this way, the cloud service integration apparatus can interact with the user for the source cloud service, the destination cloud service, and the integration relationship by using the input interface, so that the user can quickly input the identity of the source cloud service, the identity of the destination cloud service, and the integration relationship to the cloud service integration apparatus.

In a possible implementation, the cloud service integration apparatus further provides a rule presentation interface that is to be presented to the user, where the rule presentation interface includes the plurality of integration rules. In this way, the user can learn, according to the presented integration rules, integration relationships that can be applied or cannot be applied to different cloud services, so that the user develops the cloud integration architecture according to the plurality of integration rules.

In a possible implementation, in a process in which the rule presentation interface is presented to the user, in response to a screening operation on a type of a cloud service, a type of an integration relationship, or a type of an execution strategy, the cloud service integration apparatus may further determine at least one integration rule corresponding to the screening operation from the plurality of integration rules. The execution strategy indicates an applicability degree between an integration relationship in an integration rule and both a source cloud service and a destination cloud service in the integration rule, for example, "preferred", "alternative", "not recommended", "forbidden", and the like (in descending order of degrees of applicability). In this case, the cloud service integration apparatus may adjust the plurality of integration rules presented in the rule presentation interface to the determined at least one integration rule. In this way, the user can quickly view, through screening performed on a type of a cloud service, a type of an integration relationship, or a type of an execution strategy in the rule presentation interface, at least one integration rule of which the user expects to learn, thereby improving user experience.

In a possible implementation, when determining the target integration rule from the plurality of integration rules, the cloud service integration apparatus may specifically first select a plurality of candidate integration rules that match the identity of the source cloud service, the identity of the destination cloud service, and the integration relationship from the plurality of integration rules, and then determine a target integration rule with a higher priority from the plurality of candidate integration rules. A priority of the determined target integration rule is higher than a priority of another candidate integration rule in the plurality of candidate integration rules. In this way, a target integration rule used to determine whether the integration relationship is applicable to the source cloud service and the destination cloud service can be selected by setting priorities of integration rules. In addition, setting priorities of integration rules can facilitate operation and maintenance and extension of the integration rules.

In a possible implementation, when the target integration rule indicates that the integration relationship is applicable to the source cloud service and the destination cloud service, the cloud service integration apparatus may provide second prompt information that is to be presented to the user, to inform that no design error exists between the source cloud service, the destination cloud service, and the integration relationship.

In another implementation, when the target integration rule indicates that the integration relationship is applicable to the source cloud service and the destination cloud service, the cloud service integration apparatus may alternatively tacitly indicate, in a manner of not providing prompt information, the user that no error exists between the source cloud service, the destination cloud service, and the integration relationship that are designed by the user.

In a possible implementation, when the target integration rule indicates that the integration relationship is not applicable to the source cloud service and the destination cloud service, the cloud service integration apparatus may provide a target integration relationship that is to be presented to the user, where the target integration relationship is applicable to the source cloud service and the destination cloud service. In this way, when the integration relationship designed by the user is incorrect, the cloud service integration apparatus may recommend a correct integration relationship to the user, to guide the user in development of the cloud integration architecture, and improve development efficiency and user experience.

In a possible implementation, the cloud service integration apparatus may further support one or more users in providing an integration rule. Specifically, the cloud service integration apparatus obtains a to-be-authenticated integration rule. The to-be-authenticated integration rule may be, for example, uploaded by the one or more users to the cloud service integration apparatus. After the integration rule is authenticated, the cloud service integration apparatus may determine the integration rule as one of the plurality of integration rules.

In another implementation, the integration rule in the cloud service integration apparatus may alternatively be developed and configured in the cloud service integration apparatus by a skilled person.

In a possible implementation, the cloud service integration apparatus may further obtain a cloud integration architecture developed by the user, where the cloud integration architecture includes a plurality of cloud services and an integration relationship, set by the user, between the plurality of cloud services. In this case, the cloud service integration apparatus may score the cloud integration architecture developed by the user to obtain a scoring result, and provide the scoring result that is to be presented to the user. In this way, the user can evaluate quality of the currently developed cloud integration architecture by viewing the scoring result, to perform corresponding optimization on the cloud integration architecture when the scoring result indicates that the quality of the cloud integration architecture is low.

According to a second aspect, an embodiment of this application further provides a cloud service integration apparatus. The apparatus includes: an interaction module, configured to obtain an identity of a source cloud service, an identity of a destination cloud service, and an integration relationship that are specified by a user, where the integration relationship is used to restrict data communication between the source cloud service and the destination cloud service; and a matching module, configured to determine a target integration rule from a plurality of integration rules based on the identity of the source cloud service, the identity of the destination cloud service, and the integration relationship. The interaction module is further configured to: when the target integration rule indicates that the integration relationship is not applicable to the source cloud service and the destination cloud service, provide first prompt information that is to be presented to the user.

In a possible implementation, the interaction module is configured to: provide an input interface that is to be presented to the user, where the input interface includes icons of a plurality of cloud services; in response to a select operation performed by the user on the icons of the plurality of cloud services in the input interface, determine the identity of the source cloud service and the identity of the destination cloud service; and in response to an input operation performed by the user on the integration relationship in the input interface, determine the integration relationship input by the user.

In a possible implementation, the interaction module is further configured to provide a rule presentation interface that is to be presented to the user, where the rule presentation interface includes the plurality of integration rules.

In a possible implementation, the interaction module is further configured to: in response to a screening operation on a type of a cloud service, a type of an integration relationship, or a type of an execution strategy, determine at least one integration rule corresponding to the screening operation from the plurality of integration rules, where the execution strategy indicates an applicability degree between an integration relationship in an integration rule and both a source cloud service and a destination cloud service in the integration rule; and adjust the plurality of integration rules presented in the rule presentation interface to the at least one integration rule.

In a possible implementation, the matching module is configured to: select a plurality of candidate integration rules that match the identity of the source cloud service, the identity of the destination cloud service, and the integration relationship from the plurality of integration rules; and determine the target integration rule from the plurality of candidate integration rules, where a priority of the target integration rule is higher than a priority of another candidate integration rule in the plurality of candidate integration rules.

In a possible implementation, the interaction module is further configured to: when the target integration rule indicates that the integration relationship is applicable to the source cloud service and the destination cloud service, provide second prompt information that is to be presented to the user.

In a possible implementation, the interaction module is further configured to: when the target integration rule indicates that the integration relationship is not applicable to the source cloud service and the destination cloud service, provide a target integration relationship that is to be presented to the user, where the target integration relationship is applicable to the source cloud service and the destination cloud service.

In a possible implementation, the apparatus further includes an information management module, configured to: obtain a to-be-authenticated integration rule; and after the integration rule is authenticated, determine the integration rule as one of the plurality of integration rules.

In a possible implementation, the interaction module is further configured to obtain a cloud integration architecture, where the cloud integration architecture includes a plurality of cloud services and an integration relationship between the plurality of cloud services. The apparatus further includes a scoring module, configured to score the cloud integration architecture to obtain a scoring result. The interaction module is further configured to provide the scoring result that is to be presented to the user.

The cloud service integration apparatus provided in the second aspect corresponds to the cloud service integration method provided in the first aspect. Therefore, for technical effects of the cloud service integration apparatus according to the second aspect and any one of the possible implementations of the second aspect, refer to the technical effects of the first aspect and the corresponding implementations of the first aspect. Details are not described herein again.

According to a third aspect, this application provides a computing device cluster. The computing device cluster includes at least one computing device, each computing device includes a processor and a memory, and the processor of the at least one computing device is configured to execute instructions stored in the memory of the at least one computing device, to enable the computing device cluster to perform the cloud service integration method according to the first aspect or any one of the possible implementations of the first aspect. It should be noted that the memory may be integrated into the processor, or may be independent of the processor. The computing device may further include a bus. The processor is connected to the memory by using the bus. The memory may include a readable memory and a random access memory.

According to a fourth aspect, this application provides a computer-readable storage medium. The computer-readable storage medium stores instructions, and when the computer program instructions are executed by a computing device cluster, the computing device cluster performs the method according to the first aspect or any one of the implementations of the first aspect.

According to a fifth aspect, this application provides a computer program product including instructions. When the instructions are run by a computing device cluster, the computing device cluster is enabled to perform the method according to the first aspect or any one of the implementations of the first aspect.

In this application, based on the implementations according to the foregoing aspects, the implementations may be further combined to provide more implementations.

## BRIEF DESCRIPTION OF DRAWINGS

To describe technical solutions in embodiments of this application more clearly, the following briefly describes accompanying drawings used in descriptions of embodiments. It is clear that the accompanying drawings in the following descriptions show merely some embodiments described in this application, and a person of ordinary skill in the art may still derive other drawings from these accompanying drawings.

FIG. 1 is a diagram of a structure of a cloud service integration apparatus according to an embodiment of this application;

FIG. 2 is a schematic flowchart of a cloud service integration method according to an embodiment of this application;

FIG. 3 is a diagram of an example of an input interface according to an embodiment of this application;

FIG. 4 is a diagram of an example of an integration rule according to an embodiment of this application;

FIG. 5 is a diagram of another example of an integration rule according to an embodiment of this application;

FIG. 6 is a diagram of an example of a rule maintenance interface according to an embodiment of this application;

FIG. 7A and FIG. 7B are a schematic flowchart of an example of a cloud integration architecture development method according to an embodiment of this application;

FIG. 8 is a diagram of an example of a rule presentation interface according to an embodiment of this application;

FIG. 9 is a diagram of another example of a rule presentation interface according to an embodiment of this application;

FIG. 10 is a diagram of an example of a cloud integration architecture according to an embodiment of this application;

FIG. 11 is a diagram of a structure of a computing device 1100 according to an embodiment of this application;

FIG. 12 is a diagram of a structure of a computing device cluster 1200 according to an embodiment of this application;

FIG. 13 is a diagram of an example of a communication manner between different computing devices in a computing device cluster 1200; and

FIG. 14 is a diagram of another example of a communication manner between different computing devices in a computing device cluster 1200.

## DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects with a same attribute are described in embodiments of this application.

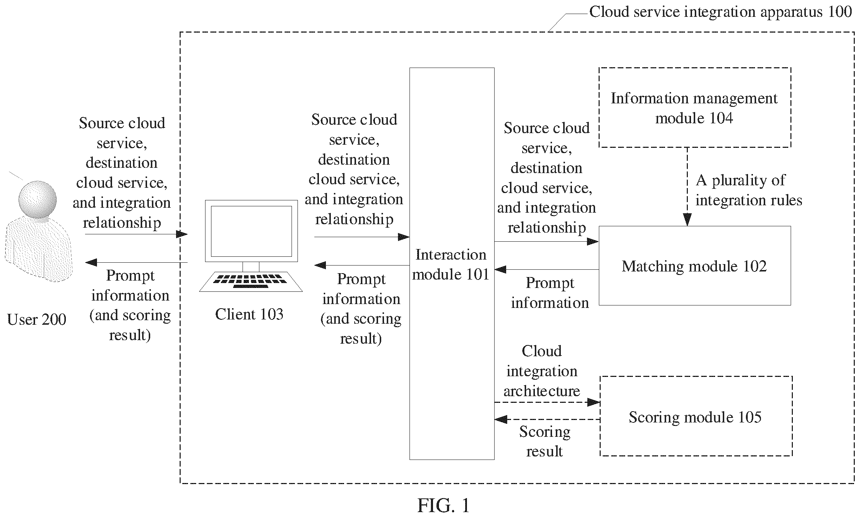

FIG. 1 is a diagram of a specific structure of a cloud service integration apparatus. As shown in FIG. 1, the cloud service integration apparatus 100 includes an interaction module 101 and a matching module 102. In addition, the cloud service integration apparatus 100 may further provide a client 103 to the outside, to interact with a user 200 (for example, a designer) by using the client 103.

The client 103 may be, for example, a network browser provided by the cloud service integration apparatus 100 to the outside. Alternatively, the client 103 may be an application (application) running on a user terminal, for example, a software development kit (software development kit, SDK) of the cloud service integration apparatus 100.

The cloud service integration apparatus 100 may be implemented by software, or may be implemented by hardware. When the cloud service integration apparatus 100 is implemented by software, the cloud service integration apparatus 100 may be an application running on a computing device, for example, a computing engine. When the cloud service integration apparatus 100 is implemented by hardware, the cloud service integration apparatus 100 may be implemented by at least one computing device, for example, implemented by a server. Alternatively, the cloud service integration apparatus 100 may be implemented by an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), generic array logic (generic array logic, GAL), or any combination thereof.

In a process of designing a cloud integration architecture, the user 200 may input an identity of a source cloud service, an identity of a destination cloud service, and an integration relationship to the cloud service integration apparatus 100 by using the client 103, to request the cloud service integration apparatus 100 to feed back whether the integration relationship is applicable to the source cloud service and the destination cloud service. The interaction module 101 of the cloud service integration apparatus 100 may provide, to the matching module 102, the identity of the source cloud service, the identity of the destination cloud service, and the integration relationship that are sent by the client 103, so that the matching module 102 determines a target integration rule from a plurality of integration rules, and feeds back the target integration rule to the interaction module 101. When the target integration rule indicates that the integration relationship is not applicable to the source cloud service and the destination cloud service, the interaction module 101 may generate first prompt information, and present the first prompt information to the user 200 by using the client 103, to inform the user 200 that the integration relationship is not applicable to the source cloud service and the destination cloud service.

When the target integration rule indicates that the integration relationship is applicable to the source cloud service and the destination cloud service, the cloud service integration apparatus 100 may not feed back prompt information to the user 200, that is, tacitly indicate that the integration relationship matches the two cloud services. Alternatively, the interaction module 101 may generate second prompt information, and present the second prompt information to the user 200 by using the client 103, to inform the user 200 that the integration relationship is applicable to the source cloud service and the destination cloud service.

In this way, when developing the cloud integration architecture, the user 200 can determine, by using the cloud service integration apparatus 100, whether the designed integration relationship is applicable to the two cloud services, without a need for human determining by learning a plurality of cloud services and integration relationships. This can lower a requirement on a technical level of the user 200 for design of the cloud integration architecture, and reduce time consumed to design the cloud integration architecture because there is no need for the user 200 to learn a large quantity of cloud services and integration relationships in depth, thereby improving development efficiency.

Further, the cloud service integration apparatus 100 may include an information management module 104 and a scoring module 105. The information management module 104 may be configured to manage information such as an integration rule, and provide the plurality of integration rules to the matching module 102. The scoring module 105 may be configured to receive, from the interaction module 101, the cloud integration architecture developed by the user 200, and score the cloud integration architecture, to feed back quality of the cloud integration architecture to the user 200 by using a scoring result.

During actual application, the cloud service integration apparatus 100 shown in FIG. 1 may be deployed on a cloud, for example, may be deployed on a public cloud, an edge cloud, a distributed cloud, a private cloud, a hybrid cloud, or the like, so that the cloud service integration apparatus 100 can provide a user with a service on the cloud for testing a matching status between an integration relationship and two cloud services. Alternatively, the cloud service integration apparatus 100 shown in FIG. 1 may be deployed locally. In this case, the cloud service integration apparatus 100 may provide a user with a local service. A specific deployment scenario and an application scenario of the cloud service integration apparatus 100 are not limited in this embodiment.

It should be noted that a division manner of the structure of the cloud service integration apparatus 100 shown in FIG. 1 is merely used as an implementation example. During actual application, an architecture of the cloud service integration apparatus 100 may also be implemented in another manner. For example, in another possible implementation, the interaction module 101 may be split into a data obtaining module and an information providing module. The data obtaining module is configured to receive information provided by the user 200 by using the client 103, for example, an identity of a source cloud service, an identity of a destination cloud service, and an integration relationship. The information providing module is configured to provide prompt information to the client 103, to present the prompt information to the user 200 by using the client 103. The prompt information may be, for example, prompt information indicating whether the integration relationship is applicable to the source cloud service and the destination cloud service. Alternatively, in still another implementation, the interaction module 101 and the client 103 may be deployed integrally on the cloud service integration apparatus 100, or the like. That is, the cloud service integration apparatus 100 may directly present prompt information to a user. Alternatively, the cloud service integration apparatus 100 may include more functional modules, to support the cloud service integration apparatus 100 in implementing more other functions. An implementation structure of the cloud service integration apparatus 100 is not limited in this embodiment.

For ease of understanding, the following describes embodiments of this application with reference to the accompanying drawings.

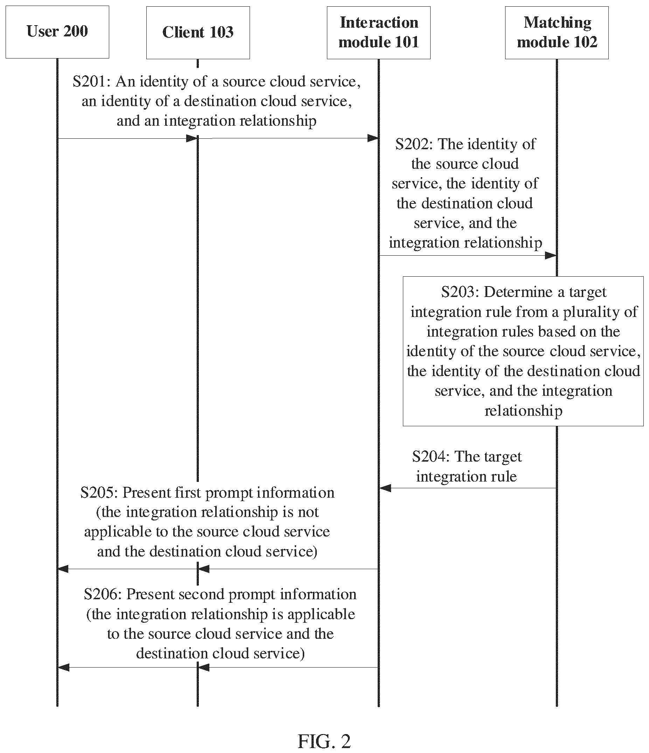

FIG. 2 is a schematic flowchart of a cloud service integration method according to an embodiment of this application. The cloud service integration method shown in FIG. 2 may be applied to the cloud service integration apparatus 100 shown in FIG. 1, or applied to a cloud service integration apparatus of another structure. For ease of description, in this embodiment, an example in which the method is applied to the cloud service integration apparatus 100 shown in FIG. 1 is used for description.

Based on the cloud service integration apparatus 100 shown in FIG. 1, the cloud service integration method shown in FIG. 2 may specifically include the following steps.

S201: The client 103 receives an identity of a source cloud service, an identity of a destination cloud service, and an integration relationship that are provided by the user 200, and sends the identity of the source cloud service, the identity of the destination cloud service, and the integration relationship to the interaction module 101.

During actual application, in a process of designing a cloud integration architecture, the user 200 usually designs an integration relationship (or may be referred to as an integration scenario) for two cloud services. One cloud service is used as a source cloud service for sending data, and the other cloud service is used as a destination cloud service for receiving data. For example, the cloud service in this embodiment may be, for example, a database service, a cloud data migration (cloud data migration, CDM) service, a cloud data replication service (data replication service, DRS), an elastic compute service (elastic compute service, ECS), an image management service (image management service, IMS), or an object storage service (object storage service, OBS) deployed on a cloud platform. In addition, different cloud services may be deployed on a same cloud platform, or deployed on different cloud platforms. The designed integration relationship may be, for example, one or more of the following: data backup, application programming interface (application programming interface, API) data integration, message consumption, batch data extraction, and incremental data synchronization, or may be another applicable integration relationship. Specific implementations of the cloud services and the integration relationship are not limited in this embodiment.

In this case, if the user 200 fully learns each cloud service and an integration relationship, for example, learns a basic function, an application scenario, a detailed specification, performance, a difference from a similar cloud service, and a limitation of a cloud service, and learns cloud services to which an integration relationship is applicable, a requirement on a technical level of the user 200 is high. This increases design difficulty, and seriously affects efficiency in designing the cloud integration architecture by the user 200. Therefore, in this embodiment, the user 200 may request the cloud service integration apparatus 100 to verify whether the designed integration relationship is applicable to the source cloud service and the destination cloud service.

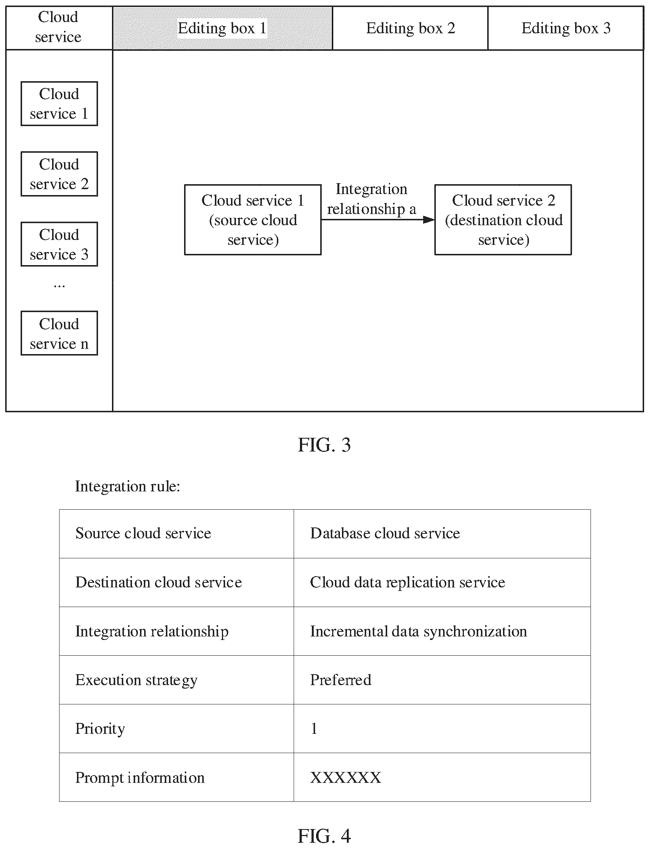

In a possible implementation, the user 200 may specify a source cloud service and a destination cloud service on the client 103, and specify an integration relationship between the two cloud services. For example, the client 103 may present an input interface shown in FIG. 3, and the input interface includes icons of a plurality of cloud services (in FIG. 3, an example in which icons of n cloud services are included is used), so that the client 103 can determine, based on a select operation performed by the user 200 on the icons of the plurality of cloud services in the input interface, the source cloud service and the destination cloud service that are specified by the user 200. For example, the user 200 may first select an icon of a cloud service in an icon bar on a left side of the input interface, and drag the icon of the cloud service to an editing box on a right side of the input interface. Then, the user 200 may select an icon of another cloud service from the icon bar, drag the icon of the cloud service to the editing box on the right side of the input interface, and add a connection line with an arrow between icons of the two cloud services, where the arrow represents a direction of data transmission between the cloud services. Correspondingly, the cloud service to which the arrow points is the destination cloud service, and the other cloud service is the source cloud service, as shown in FIG. 3.

Next, the user 200 may proceed to specify the integration relationship in the input interface. For example, the user 200 may double-click the connection line between the two cloud services to input an identity (for example, a name) of the integration relationship. Alternatively, the cloud service integration apparatus 100 may present names of a plurality of integration relationships to the user by using the client 103, so that the user 200 selects a corresponding integration relationship from the plurality of integration relationships according to a design requirement. In this way, the cloud service integration apparatus 100 may determine, based on an input operation performed by the user 200, the integration relationship input by the user 200.

In this case, the client 103 may generate a verification request, and send the verification request to the interaction module 101, where the verification request may include the identity of the source cloud service, the identity of the destination cloud service, and the integration relationship, to request the cloud service integration apparatus 100 to verify an applicability degree between the integration relationship and both the source cloud service and the destination cloud service.

S202: The interaction module 101 forwards the identity of the source cloud service, the identity of the destination cloud service, and the integration relationship to the matching module 102.

S203: The matching module 102 determines a target integration rule from a plurality of integration rules based on the identity of the source cloud service, the identity of the destination cloud service, and the integration relationship.

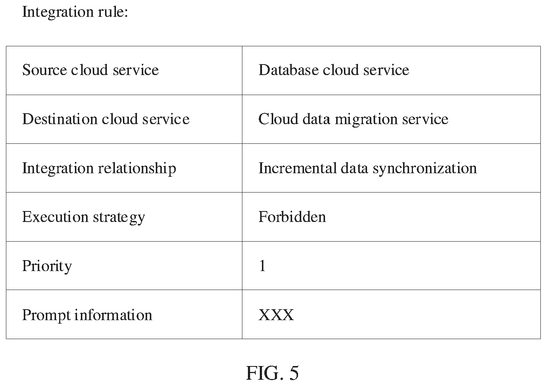

An integration rule may include an identity of a cloud service used as a source cloud service, an identity of a cloud service used as a destination cloud service, an identity of an integration relationship, and an execution strategy. The execution strategy indicates an applicability degree between the integration relationship and the two cloud services. For example, execution strategies may be classified into "preferred", "alternative", "not recommended", "forbidden", and the like in descending order of degrees of applicability. For example, in an integration rule shown in FIG. 4, a database service is used as a source cloud service, a cloud data replication service is used as a destination cloud service, and an integration relationship is incremental data synchronization. In addition, an execution strategy (that is, "Preferred" in FIG. 4) in the integration rule indicates that the incremental data synchronization is applicable to the database service and the cloud data replication service. In an integration rule shown in FIG. 5, a database service is used as a source cloud service, a cloud data migration service is used as a destination cloud service, and an integration relationship is incremental data synchronization. In addition, an execution strategy (that is, "Forbidden" in FIG. 5) in the integration rule indicates that the incremental data synchronization is not applicable to the database service and the cloud data migration service.

During actual application, a value of the source cloud service or destination cloud service in the integration rule may alternatively be "all cloud services" (or "ALL" or the like), which represents all cloud services. For example, when the source cloud service is "all cloud services", it indicates that the integration relationship in the integration rule is applicable to or not applicable to any cloud service and the destination cloud service.

Further, a priority may be defined in the integration rule, and the priority indicates a priority in determining the applicability degree between the integration relationship and the two cloud services by the cloud service integration apparatus 100 according to the integration rule. For example, when there are two integration rules that indicate an applicability degree between a same integration relationship and both a same source cloud service and a same destination cloud service, the cloud service integration apparatus 100 may determine the applicability degree between the integration relationship and the two cloud services according to an integration rule with a higher priority. As shown in FIG. 4 and FIG. 5, priorities may be classified into 1 to 5. A priority of 5 represents a lowest priority, and a priority of 1 represents a highest priority. In addition, prompt information may be defined in the integration rule, as shown in FIG. 4 and FIG. 5. In this way, when determining the applicability degree between the integration relationship and the two cloud services according to the integration rule, the cloud service integration apparatus 100 prompts the user 200 by using the prompt information in the integration rule.

In this embodiment, a plurality of integration rules may be preconfigured in the cloud service integration apparatus 100. The plurality of integration rules may be uploaded by another user to the cloud service integration apparatus 100, or may be preconfigured in the cloud service integration apparatus 100 by a skilled person. This is not limited in this embodiment.

In this way, the matching module 102 may select a target integration rule that matches the identity of the source cloud service, the identity of the destination cloud service, and the integration relationship from the plurality of preconfigured integration rules based on the identity of the source cloud service, the identity of the destination cloud service, and the integration relationship. For example, it is assumed that the source cloud service specified by the user 200 is a database service, the destination cloud service is a cloud data migration service, and the integration relationship is incremental data synchronization. In this case, the matching module 102 may determine, by traversing the plurality of integration rules, that there is an integration rule in which a source cloud service is defined as a database service, a destination cloud service is defined as a cloud data migration service, and an integration relationship is defined as incremental data synchronization, and the matching module 102 may determine the integration rule as the target integration rule.

In an actual application scenario, there are a large quantity of cloud services, and with evolution of cloud computing, types and a quantity of cloud services may continuously increase. Therefore, in some of the integration rules in the cloud service integration apparatus 100, a value of a source cloud service is defined as "all cloud services", or a value of a destination cloud service is defined as "all cloud services", to facilitate maintenance and update of the integration rules. In this case, when traversing the plurality of integration rules in the cloud service integration apparatus 100, the matching module 102 may select a plurality of candidate integration rules. The candidate integration rules selected may satisfy any one of the following six cases:

Case 1: A source cloud service defined in the candidate integration rule is the source cloud service (for example, a database service) specified by the user 200, a destination cloud service defined in the candidate integration rule is the destination cloud service (for example, a cloud data migration service) specified by the user 200, and an integration relationship is the integration relationship specified by the user 200.

Case 2: A source cloud service defined in the candidate integration rule is the source cloud service (for example, a database service) specified by the user 200, a destination cloud service defined in the candidate integration rule indicates any cloud service, for example, a value of the destination cloud service is "all cloud services", and an integration relationship is the integration relationship specified by the user 200.

Case 3: A source cloud service defined in the candidate integration rule indicates any cloud service, for example, a value of the source cloud service is "all cloud services", a destination cloud service defined in the candidate integration rule is the destination cloud service (for example, a cloud data migration service) specified by the user 200, and an integration relationship is the integration relationship specified by the user 200.

Case 4: A source cloud service defined in the candidate integration rule is the source cloud service specified by the user 200, a destination cloud service defined in the candidate integration rule is the destination cloud service specified by the user 200, and an integration relationship defined in the candidate integration rule is any integration relationship (for example, a value of the integration relationship is "all integration relationships", or "ALL" or the like).

Case 5: A source cloud service defined in the candidate integration rule is the source cloud service (for example, a database service) specified by the user 200, a destination cloud service defined in the candidate integration rule indicates any cloud service, and an integration relationship defined in the candidate integration rule is any integration relationship (for example, a value of the integration relationship is "all integration relationships", or "ALL" or the like).

Case 6: A source cloud service defined in the candidate integration rule indicates any cloud service, a destination cloud service defined in the candidate integration rule is the destination cloud service specified by the user 200, and an integration relationship defined in the candidate integration rule is any integration relationship (for example, a value of the integration relationship is "all integration relationships", or "ALL" or the like).

In this case, after selecting the plurality of candidate integration rules, the matching module 102 may further determine a target integration rule with a highest priority based on priorities of the candidate integration rules. For example, it is assumed that the matching module 102 selects a candidate integration rule 1 and a candidate integration rule 2; in the candidate integration rule 1, a source cloud service is defined as a database service, a destination cloud service is defined as all cloud services, an integration relationship is defined as incremental data synchronization, and a priority is 5; and in the candidate integration rule 2, a source cloud service is defined as a database service, a destination cloud service is defined as a cloud data migration service, an integration relationship is defined as incremental data synchronization, and a priority is 1. In this case, the matching module 102 may use the candidate integration rule 2 with the higher priority as a finally determined target integration rule. In addition, when priorities of a plurality of candidate integration rules are all the highest, the matching module 102 may select any candidate integration rule from the plurality of candidate integration rules with the highest priorities as the target integration rule, or determine a candidate integration rule that is most frequently used by a user as the target integration rule. This is not limited in this embodiment.

S204: The matching module 102 sends the target integration rule to the interaction module 101.

S205: When the determined target integration rule indicates that the integration relationship is not applicable to the source cloud service and the destination cloud service that are specified by the user 200, the interaction module 101 presents first prompt information by using the client 103.

S206: When the determined target integration rule indicates that the integration relationship is applicable to the source cloud service and the destination cloud service that are specified by the user 200, the interaction module 101 presents second prompt information by using the client 103.

Generated prompt information (including the first prompt information, the second prompt information, and the like) is used to inform the user 200 whether the integration relationship is applicable to the source cloud service and the destination cloud service. For example, when a value of an execution strategy in the target integration rule is "forbidden", the interaction module 101 may generate first prompt information indicating that the integration relationship is not applicable to the source cloud service and the destination cloud service; or when the value of the execution strategy in the target integration rule is "preferred", "alternative", or "not recommended", the interaction module 101 may generate second prompt information indicating that the integration relationship is applicable to the source cloud service and the destination cloud service.

In some implementation examples, the interaction module 101 may present the prompt information to the user 200 by using the client 103 in a text or icon manner. For example, when the value of the execution strategy in the target integration rule is "forbidden", the interaction module 101 may present a red warning icon by using the client 103. When the value of the execution strategy in the target integration rule is "preferred", the interaction module 101 may present a green icon by using the client 103. When the value of the execution strategy in the target integration rule is "alternative" or "not recommended", the interaction module 101 may present a yellow icon by using the client 103. Further, when presenting an icon by using the client 103, the interaction module 101 may present, by using the client 103, text prompt content defined in the target integration rule.

In this way, when developing the cloud integration architecture, the user 200 can determine, by using the cloud service integration apparatus 100, whether the designed integration relationship is applicable to the two cloud services, without a need for human determining by learning a plurality of cloud services and integration relationships. This can lower a requirement on a technical level of the user 200 for design of the cloud integration architecture, and reduce time consumed to design the cloud integration architecture because there is no need for the user 200 to learn a large quantity of cloud services and integration relationships in depth, thereby improving development efficiency.

Further, when it is determined, according to the target integration rule, that the integration relationship specified by the user 200 is not applicable to the source cloud service and the destination cloud service that are specified by the user 200, the cloud service integration apparatus 100 may recommend, to the user, another integration relationship that is applicable to the source cloud service and the destination cloud service (which is referred to as a target integration relationship below for ease of distinguishing). During specific implementation, the matching module 102 may select an integration rule that matches the identity of the source cloud service and the identity of the destination cloud service that are specified by the user 200 from a plurality of integration rules based on the identity of the source cloud service and the identity of the destination cloud service. That is, a source cloud service and a destination cloud service that are defined in the integration rule selected are consistent with the cloud services specified by the user 200. In addition, integration relationships defined in different integration rules selected are different. Then, the interaction module 101 may determine, according to execution strategies in the integration rules selected by the matching module 102, an integration rule in which a value of an execution strategy is "preferred", determine an integration relationship included in the integration rule as the target integration relationship, and present the integration relationship to the user 200 by using the client 103. During actual application, if the plurality of integration rules selected by the matching module 102 do not include an integration rule in which a value of an execution strategy is "preferred", the interaction module 101 may use an integration relationship in an integration rule in which an execution strategy is "alternative" (or "not recommended") as the target integration relationship, and recommend the integration relationship to the user 200.

In this way, when the integration relationship designed by the user 200 is not appropriate, the cloud service integration apparatus 100 may recommend, to the user 200, an integration relationship that is applicable to the source cloud service and the destination cloud service, so that the user 200 develops the cloud integration architecture based on the recommended integration relationship. This can further improve the efficiency in developing the cloud integration architecture by the user 200, and improve user experience.

It should be noted that, in the embodiment shown in FIG. 2, an example in which the cloud service integration apparatus 100 determines whether an integration relationship specified by the user 200 is applicable to two cloud services is used for description. During actual application, in a process of developing a cloud integration architecture by the user 200, design of more than three (including three) cloud services and integration relationships between these cloud services is usually involved, and an integration relationship applicable to other cloud services may also be determined by using the process described in the foregoing embodiment. Details are not described in this embodiment again.

It should be understood that when determining whether the integration relationship specified by the user 200 is applicable to the source cloud service and the destination cloud service that are specified by the user 200, the cloud service integration apparatus 100 needs to obtain a plurality of integration rules. The following describes an example of a process of configuring a plurality of integration rules in the cloud service integration apparatus 100.

In an implementation example, the information management module 104 of the cloud service integration apparatus 100 may receive, by using the interaction module 101, integration rules uploaded by one or more other users (or the user 200). For example, another user may determine, based on development experience of a cloud integration architecture, integration relationships used between a plurality of cloud services, so that the another user customizes one or more integration rules. Each integration rule includes at least a source cloud service, a destination cloud service, an integration relationship, and an execution strategy. Further, the integration rule customized by the another user may include content such as a priority and prompt information. Then, the cloud service integration apparatus 100 may submit, to a skilled person for review, the integration rule uploaded by the another user. After the integration rule is reviewed and authenticated, the information management module 104 may add the integration rule to a rule library of the cloud service integration apparatus 100. The rule library may include a plurality of integration rules that are reviewed and authenticated. In addition, the cloud service integration apparatus 100 supports another user (or the user 200) in deleting or modifying an integration rule in the cloud service integration apparatus 100.

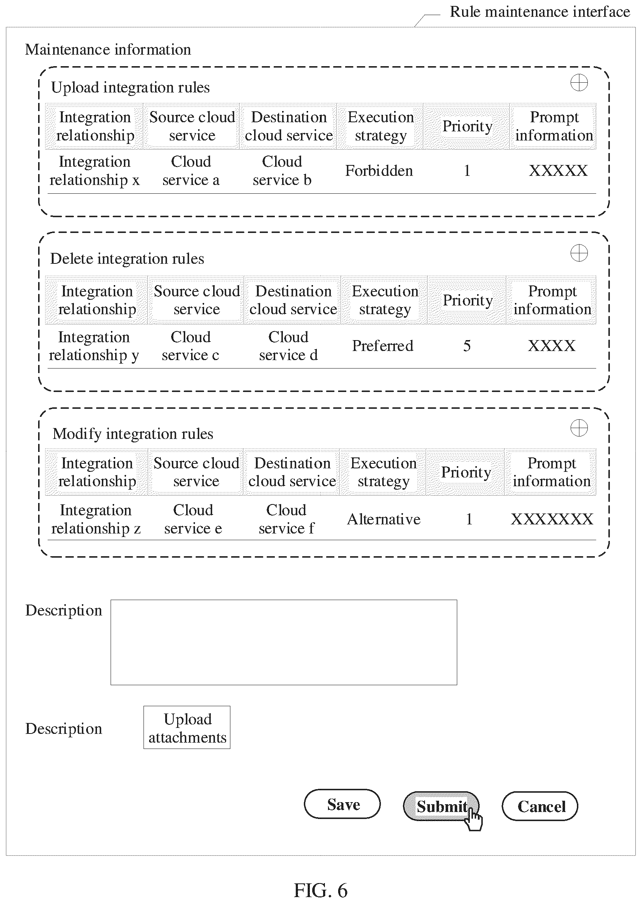

For example, the cloud service integration apparatus 100 may present a rule maintenance interface shown in FIG. 6 by using the client 103, so that another user (or the user 200) may upload one or more integration rules in the rule maintenance interface. In a process of uploading the integration rule by the another user, an integration relationship in the integration rule may be selected from a plurality of integration relationships provided by the cloud service integration apparatus 100, or the another user may be supported in customizing an integration relationship (the customized integration relationship is expressed as standardized as possible). In addition, the another user may apply, in the rule maintenance interface, to delete an integration rule or modify an integration rule, and the cloud service integration apparatus 100 may support the another user in uploading, deleting, and modifying integration rules in batches. In addition, when uploading, deleting, or modifying an integration rule, the another user may fill in a maintenance description for the integration rule and add an attachment in the rule maintenance interface, so that a skilled person can refer to the maintenance description or the attachment to process an application of the another user to upload, delete, or modify the integration rule. During actual application, the cloud service integration apparatus 100 may further support another user in viewing an integration rule processing record of the another user, and may further check whether a plurality of integration rules that the another user applies to upload or modify include a duplicate integration rule, check whether rules that the another user applies to delete and modify are a same integration rule, and the like.

Correspondingly, for an application of another user (or the user 200) to upload, modify, or delete an integration rule, the cloud service integration apparatus 100 may present, by using a client used by a skilled person, the application to the skilled person for human review, and after the human review is passed, add an uploaded integration rule to the rule library of the cloud service integration apparatus 100, or delete an integration rule in the rule library, or replace an integration rule in the rule library with a modified integration rule. For example, the interaction module 101 may emphasize, in a manner such as highlighting, an integration rule uploaded by another user, so that a skilled person can perform focused review. In addition, the cloud service integration apparatus 100 may support operations such as query, modification, and combination performed by another user on integration rules.

In this case, the cloud service integration apparatus 100 may accumulate and share integration rules defined by a plurality of users based on development experience of cloud integration architectures. This helps further improve quality of a cloud integration architecture developed by a user.

In another implementation example, a skilled person may develop a plurality of integration rules, the interaction module 101 may provide an interaction interface to the skilled person, and the skilled person imports the plurality of developed integration rules into the cloud service integration apparatus 100 by using the interaction interface. During actual application, the cloud service integration apparatus 100 may alternatively obtain a plurality of integration rules in another manner. This is not limited in this embodiment.

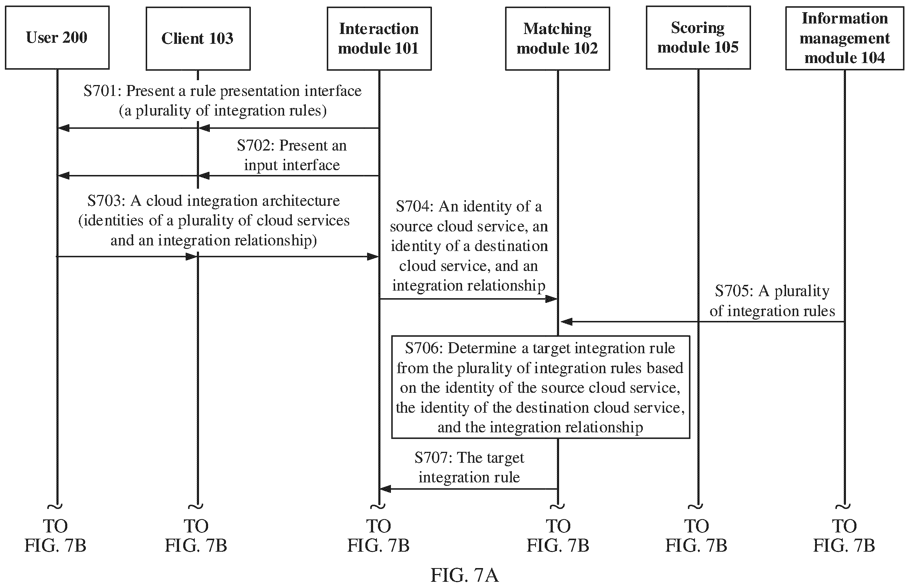

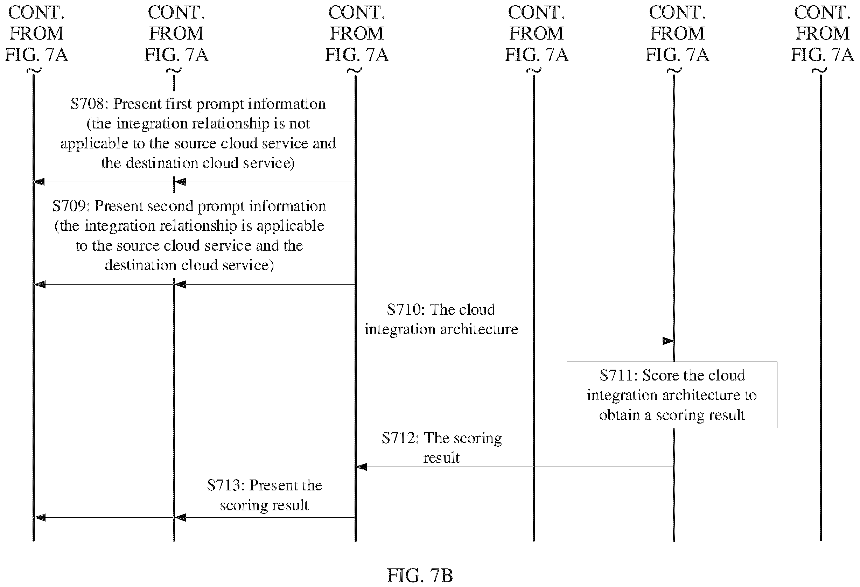

The cloud service integration method shown in FIG. 2 mainly describes a process in which the cloud service integration apparatus 100 determines whether the integration relationship specified by the user 200 is applicable to the source cloud service and the destination cloud service that are specified by the user 200. With reference to the accompanying drawings, the following describes an example of a process in which the user 200 develops a cloud integration architecture by using the cloud service integration apparatus 100. FIG. 7A and FIG. 7B are a schematic flowchart of an example of a cloud integration architecture development method. As shown in FIG. 7A and FIG. 7B, the method may specifically include the following steps.

S701: The interaction module 101 presents a rule presentation interface by using the client 103, where the rule presentation interface includes a plurality of integration rules.

In this embodiment, a plurality of integration rules may be preconfigured in the cloud service integration apparatus 100. The plurality of integration rules may be uploaded by a plurality of users to the cloud service integration apparatus 100, or may be preconfigured in the cloud service integration apparatus 100 by a skilled person. For ease of developing a cloud integration architecture by the user 200, the cloud service integration apparatus 100 may present the plurality of integration rules to the user 200 by using the client 103, so that the user 200 can quickly learn integration relationships applicable to different cloud services, and the user 200 can select a correct integration relationship between a plurality of cloud services included in the cloud integration architecture.

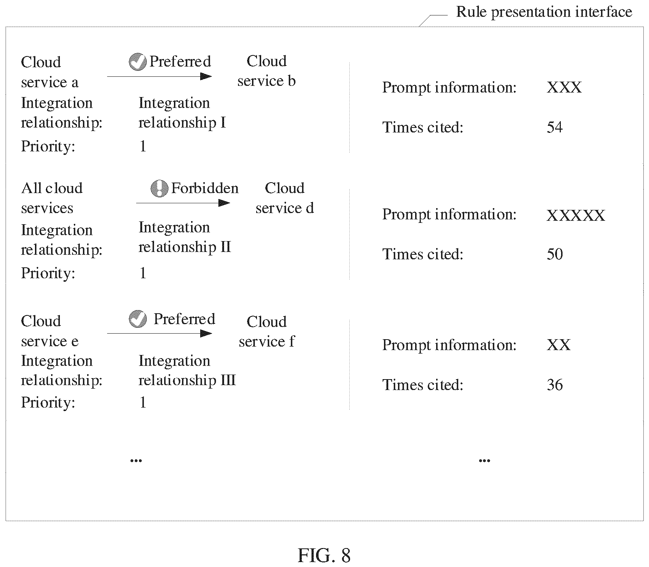

In an implementation example, the interaction module 101 may present a rule presentation interface shown in FIG. 8 to the user 200 by using the client 103. The rule presentation interface may present the plurality of integration rules, including a name of a source cloud service, a name of a destination cloud service, an integration relationship, an execution strategy, a priority, prompt information, and the like that are included in each integration rule. The plurality of integration rules may be obtained from the information management module 104. In addition, the rule presentation interface may present a quantity of times each integration rule is cited, so that the user 200 can preferentially learn an integration rule with more cited times (that is, preferentially learn a popular integration rule) and evaluate value of the integration rules. During actual application, the rule presentation interface may further present information such as an upload time and an upload author of the integration rule, and a name of an enterprise to which the integration rule belongs. This is not limited in this embodiment.

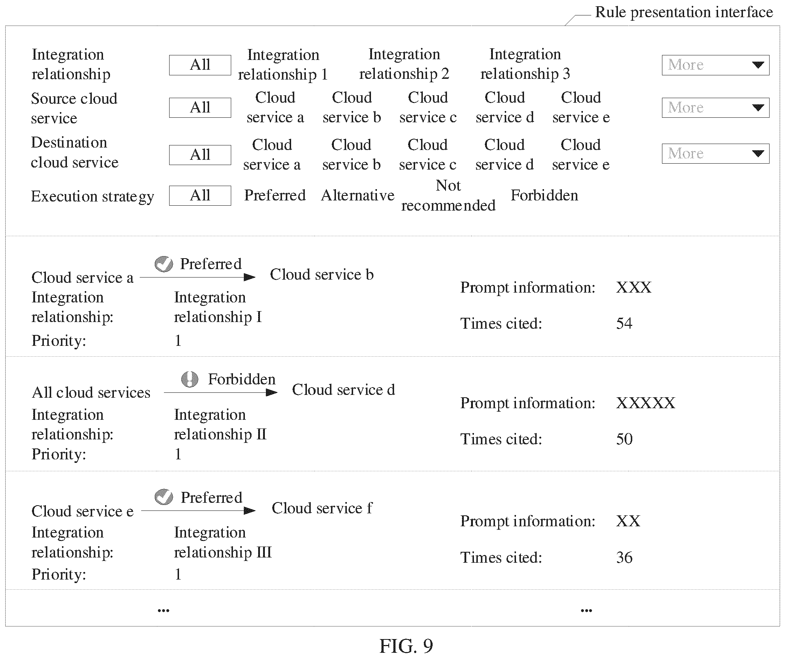

In a further implementation, the interaction module 101 may further support, based on the rule presentation interface, the user 200 in retrieving integration rules. For example, a rule presentation interface shown in FIG. 9 may present type icons of a plurality of integration relationships, type icons of a plurality of source cloud services, type icons of a plurality of destination cloud services, and type icons of a plurality of execution strategies, so that the user 200 can select some icons according to a retrieval requirement of an actual application. In this case, the interaction module 101 determines, based on a screening operation performed by the user 200 on icons, one or more integration rules corresponding to the screening operation from the plurality of integration rules, and adjusts the plurality of integration rules presented in the rule presentation interface to the one or more integration rules selected. During actual application, the interaction module 101 may present the integration rules in the rule presentation interface in descending order of cited times.

S702: The interaction module 101 presents an input interface to the user 200 by using the client 103.

S703: The client 103 receives a cloud integration architecture provided by the user 200 in the input interface, where the cloud integration architecture includes identities of a plurality of cloud services and an integration relationship between the plurality of cloud services; and sends the cloud integration architecture to the interaction module 101.

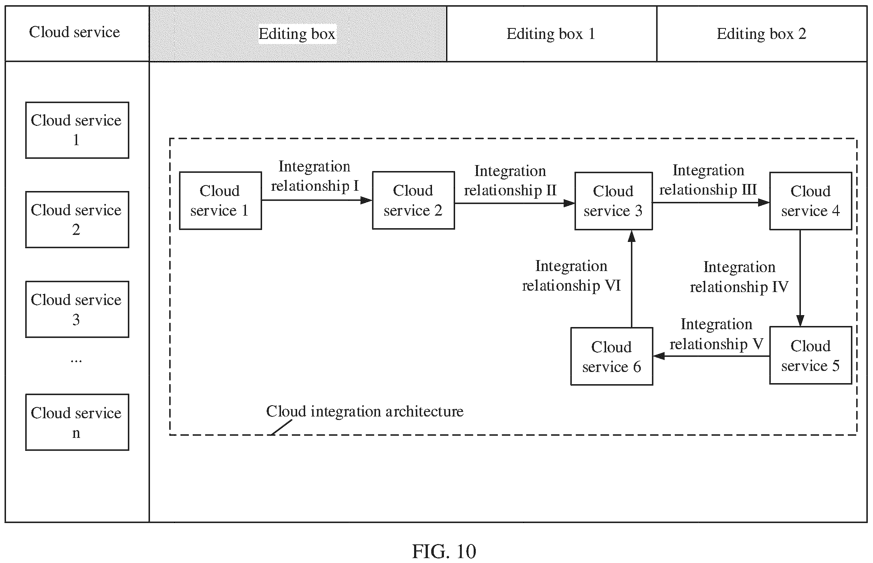

In this embodiment, the user 200 may develop the cloud integration architecture in the input interface presented by using the client 103, for example, may add icons of the plurality of cloud services to an editing box in the input interface, add a connection line with an arrow for the plurality of cloud services (a connection line without an arrow may be equivalent to a connection line with a bidirectional arrow), and add an integration relationship on the connection line. Correspondingly, the plurality of cloud services with the connection line may form the cloud integration architecture, as shown in FIG. 10.

S704: The interaction module 101 sends an identity of a source cloud service, an identity of a destination cloud service, and an integration relationship to the matching module 102 based on the cloud integration architecture.

In this embodiment, for any two cloud services that are connected in the cloud integration architecture, the interaction module 101 may determine a source cloud service and a destination cloud service in the two cloud services based on an arrow, specified by the user 200, of a connection line between the two cloud services, and send an identity of the source cloud service, an identity of the destination cloud service, and an integration relationship to the matching module 102.

S705: The matching module 102 obtains the plurality of integration rules from the information management module 104.

S706: The matching module 102 determines a target integration rule from the plurality of integration rules based on the identity of the source cloud service, the identity of the destination cloud service, and the integration relationship.

S707: The matching module 102 sends the target integration rule to the interaction module 101.

S708: When the determined target integration rule indicates that the integration relationship designed by the user 200 for the source cloud service and the destination cloud service is not applicable to the two cloud services, the interaction module 101 presents first prompt information by using the client 103.

S709: When the determined target integration rule indicates that the integration relationship designed by the user 200 for the source cloud service and the destination cloud service is applicable to the two cloud services, the interaction module 101 presents second prompt information by using the client 103.

During actual application, there may be three or more cloud services in the cloud integration architecture. In this case, the interaction module 101 may request corresponding integration rules from the matching module 102 for different cloud services in a manner of performing step S704 for a plurality of times, so that the user 200 determines whether integration relationships related to different cloud services in the cloud integration architecture are appropriate.

For a specific implementation process of step S705 to step S709, refer to the specific implementation of step S202 to step S205 in the foregoing embodiment. Details are not described herein again. In addition, the steps and the execution sequence of the steps shown in this embodiment are merely used as an example for description, and are not intended to limit a specific process of implementing development of a cloud integration architecture. For example, in another embodiment, step S705 may be performed before step S704, or the matching module 102 may persistently pre-store a plurality of integration rules.

S710: The interaction module 101 sends the cloud integration architecture developed by the user 200 to the scoring module 105.

S711: The scoring module 105 scores the cloud integration architecture to obtain a scoring result.

S712: The scoring module 105 sends the scoring result to the interaction module 101.

S713: The interaction module 101 presents the scoring result to the user 200 by using the client 103.

In this embodiment, the cloud service integration apparatus 100 may further support a function of scoring the cloud integration architecture developed by the user 200, so that the user 200 evaluates quality of the currently developed cloud integration architecture based on the scoring result, to make a corresponding adjustment to the cloud integration architecture when the quality of the cloud integration architecture is low.

In an example of scoring, the scoring module 105 may perform scoring according to a basic composition rule and a matching rule that are preset. The basic composition rule may be used to evaluate the quality of the cloud integration architecture from the perspective of a graph structure. For example, the basic composition rule may include that there is no isolated point in the constructed cloud integration architecture, each cloud service (corresponding to each node in an architectural diagram) in the cloud integration architecture has an identity such as a name, there is a description of an integration relationship on a connection line between any two cloud services, and the like. The matching rule may be used to evaluate the quality of the cloud integration architecture from the perspective of integration rule matching. For example, evaluation is performed based on a proportion of designed integration relationships that are "forbidden" (that is, integration relationship design is not appropriate) in the cloud integration architecture.

In this embodiment, the scoring module 105 may score the cloud integration architecture according to Formula (1):

$$W = a * \left( \frac{N_{Matching\ succeeded}}{N_{Total\ quantity}} \right) + \rho * \left( \frac{M_{Matching\ succeeded}}{M_{Total\ quantity}} \right) \tag{1}$$

W is a score, $a$ is a scoring weight corresponding to the basic composition rule, $N_{Total\ quantity}$ is a total quantity of rules in the basic composition rule, $N_{Matching\ succeeded}$ is a quantity of rules that are satisfied in the basic composition rule, $\rho$ is a scoring weight corresponding to the matching rule, $M_{Total\ quantity}$ is a total quantity of integration rules matched based on the cloud integration architecture, and $M_{Matching\ succeeded}$ is a quantity of integration rules in which integration relationships are not "forbidden" in all the integration rules matched based on the cloud integration architecture.

Certainly, the foregoing process of scoring the cloud integration architecture is used as an example for description. During actual application, the scoring module 105 may alternatively score the cloud integration architecture according to another rule. This is not limited in this embodiment.

In the foregoing embodiments, the cloud service integration apparatus 100 involved in a cloud service integration process may be configured in software on a computing device. In addition, the computing device may implement functions of the cloud service integration apparatus 100 by running the software on the computing device. In another possible implementation, the cloud service integration apparatus 100 may alternatively be implemented by a separate hardware device. The following describes in detail, from a perspective of hardware device implementation, the cloud service integration apparatus 100 involved in the cloud service integration process.

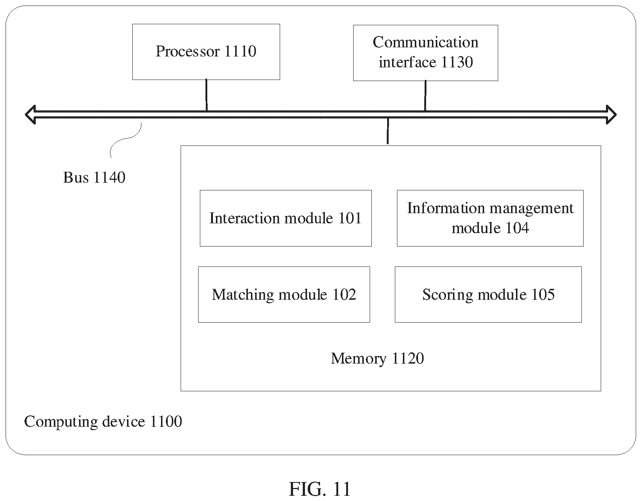

FIG. 11 is a diagram of a structure of a computing device. The cloud service integration apparatus 100 may be deployed on the computing device. The computing device may be a computing device (for example, a server) in a cloud environment, a computing device in an edge environment, a terminal device, or the like, and may be specifically configured to implement functions of the cloud service integration apparatus 100 in the embodiments shown in FIG. 2 and FIG. 7A and FIG. 7B.

As shown in FIG. 11, the computing device 1100 includes a processor 1110, a memory 1120, a communication interface 1130, and a bus 1140. The processor 1110, the memory 1120, and the communication interface 1130 communicate with each other by using the bus 1140. It should be understood that quantities of processors and memories in the computing device 1100 are not limited in this application.

The bus 1140 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one bold line is used in FIG. 11 to represent the bus, but this does not mean that there is only one bus or only one type of bus. The bus 1140 may include a path for transmitting information between components (for example, the processor 1110, the memory 1120, and the communication interface 1130) of the computing device 1100.

The processor 1110 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1120 may include a volatile memory (volatile memory), for example, a random access memory (random access memory, RAM). The memory 1120 may further include a non-volatile memory (non-volatile memory), for example, a read-only memory (read-only memory, ROM), a flash memory, a hard disk drive (hard disk drive, HDD), or a solid state drive (solid state drive, SSD). The memory 1120 stores executable program code, and the processor 1110 executes the executable program code to implement the foregoing cloud service integration method. Specifically, the memory 1120 stores an instruction used by the cloud service integration apparatus 100 to perform the cloud service integration method.

The communication interface 1130 uses a transceiver module, for example, but not limited to, a network interface card or a transceiver, to implement communication between the computing device 1100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

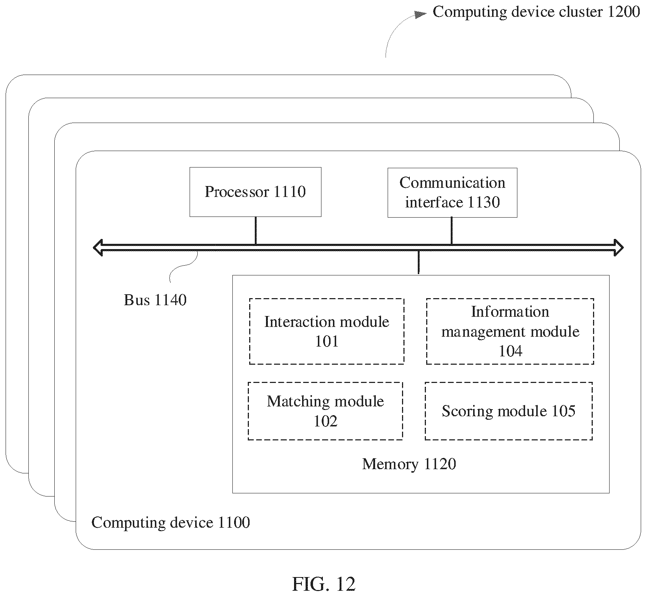

As shown in FIG. 12, the computing device cluster 1200 includes at least one computing device 1100. Memories 1120 in the one or more computing devices 1100 in the computing device cluster 1200 may store a same instruction used by the cloud service integration apparatus 100 to perform the cloud service integration method.

In some possible implementations, the one or more computing devices 1100 in the computing device cluster 1200 may alternatively store some instructions used by the cloud service integration apparatus 100 to perform the cloud service integration method. In other words, the one or more computing devices 1100 may jointly execute instructions used by the cloud service integration apparatus 100 to perform the cloud service integration method.

It should be noted that the memories 1120 in different computing devices 1100 in the computing device cluster 1200 may store different instructions, to perform some functions of the cloud service integration apparatus 100.

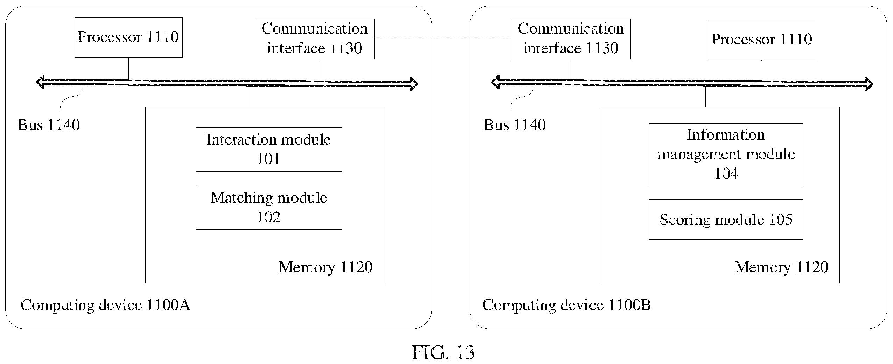

FIG. 13 shows a possible implementation. As shown in FIG. 13, a computing device 1100A and a computing device 1100B in a computing device cluster 1200 are connected by using a communication interface 1130. A memory in the computing device 1100A stores an instruction used to perform functions of the interaction module 101 and the matching module 102 in the cloud service integration apparatus 100. A memory in the computing device 1100B stores an instruction used to perform functions of the information management module 104 and the scoring module 105 in the cloud service integration apparatus 100. In other words, memories 1120 of the computing device 1100A and the computing device 1100B jointly store instructions used by the cloud service integration apparatus 100 to perform the cloud service integration method.

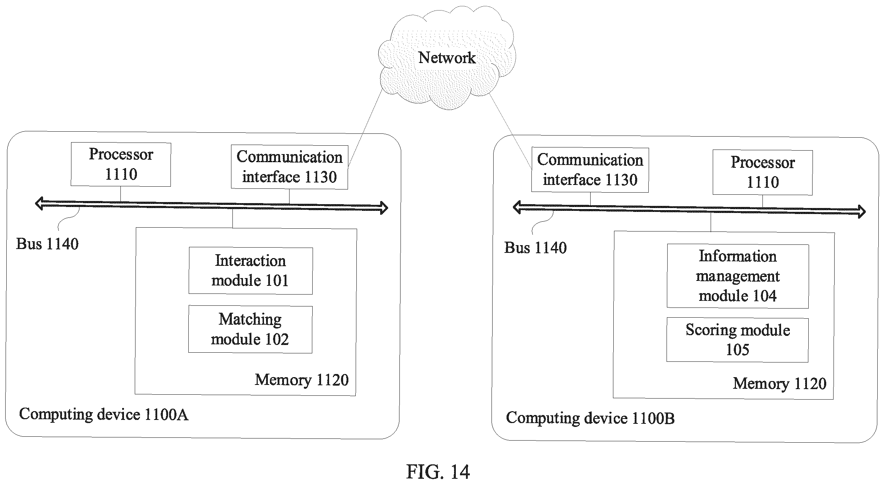

The two computing devices shown in FIG. 13 are connected by using the communication interface 1130. In another computing device cluster, different computing devices may be connected by using a network. The network may be a wide area network, a local area network, or the like. As shown in FIG. 14, a computing device 1100A and a computing device 1100B in a computing device cluster 1200 may be connected by using a network, or the like.

It should be understood that functions of the computing device 1100A shown in FIG. 13 and FIG. 14 may also be completed by a plurality of computing devices 1100. Similarly, functions of the computing device 1100B may also be implemented by a plurality of computing devices 1100. In addition, the instruction stored in the memory in the computing device shown in FIG. 13 and FIG. 14 is merely used as an example, and is not intended to constitute a limitation. For example, in another implementation, the memory in the computing device 1100A stores an instruction used to perform a function of the interaction module 101. The memory in the computing device 1100B stores an instruction used to perform functions of the matching module 102, the information management module 104, and the scoring module 105, and the like.

In addition, an embodiment of this application provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct a computing device to perform the foregoing cloud service integration method applied to the cloud service integration apparatus 100.

In addition, an embodiment of this application provides a computer program product including instructions. The computer program product may be software or a program product that includes instructions and that can be run on a computing device or stored in any usable medium. When the computer program product is run on at least one computing device, the at least one computing device is enabled to perform the foregoing cloud service integration method. The computer program product may be a software installation package. When any method of the foregoing cloud service integration method needs to be used, the computer program product may be downloaded and executed on a computer.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all of the modules may be selected according to an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function completed by a computer program may be easily implemented by using corresponding hardware. In addition, specific hardware structures configured to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk, a ROM, a RAM, a magnetic disk, or an optical disc of a computer, and includes several instructions for instructing a computing device (which may be a personal computer, a training device, a network device, or the like) to perform the method in embodiments of this application.

All or some of the foregoing embodiments may be implemented by software, hardware, firmware, or any combination thereof. When software is used to implement the embodiments, all or some of the embodiments may be implemented in a form of computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Finally, it should be noted that the foregoing embodiments are merely intended to describe the technical solutions of the present invention, but not intended to constitute a limitation. Although the present invention is described in detail with reference to the foregoing embodiments, a person of ordinary skill in the art should understand that modifications can still be made to the technical solutions described in the foregoing embodiments or equivalent replacements can still be made to some technical features thereof, without departing from the protection scope of the technical solutions of embodiments of the present invention.

**Claims**

1. A cloud service integration method, wherein the method comprises:

obtaining an identity of a source cloud service, an identity of a destination cloud service, and an integration relationship that are specified by a user, wherein the integration relationship is used to restrict data communication between the source cloud service and the destination cloud service;

determining a target integration rule from a plurality of integration rules based on the identity of the source cloud service, the identity of the destination cloud service, and the integration relationship; and

when the target integration rule indicates that the integration relationship is not applicable to the source cloud service and the destination cloud service, providing first prompt information that is to be presented to the user.

2. The method according to claim 1, wherein the obtaining an identity of a source cloud service, an identity of a destination cloud service, and an integration relationship that are specified by a user comprises:

providing an input interface that is to be presented to the user, wherein the input interface comprises icons of a plurality of cloud services;

in response to a select operation performed by the user on the icons of the plurality of cloud services in the input interface, determining the identity of the source cloud service and the identity of the destination cloud service; and

in response to an input operation performed by the user on the integration relationship in the input interface, determining the integration relationship input by the user.

3. The method according to claim 1 or 2, wherein the method further comprises:
providing a rule presentation interface that is to be presented to the user, wherein the rule presentation interface comprises the plurality of integration rules.

4. The method according to claim 3, wherein the method further comprises:

in response to a screening operation on a type of a cloud service, a type of an integration relationship, or a type of an execution strategy, determining at least one integration rule corresponding to the screening operation from the plurality of integration rules, wherein the execution strategy indicates an applicability degree between an integration relationship in an integration rule and both a source cloud service and a destination cloud service in the integration rule; and

adjusting the plurality of integration rules presented in the rule presentation interface to the at least one integration rule.

5. The method according to any one of claims 1 to 4, wherein the determining a target integration rule from a plurality of integration rules based on the identity of the source cloud service, the identity of the destination cloud service, and the integration relationship comprises:

selecting a plurality of candidate integration rules that match the identity of the source cloud service, the identity of the destination cloud service, and the integration relationship from the plurality of integration rules; and

determining the target integration rule from the plurality of candidate integration rules, wherein a priority of the target integration rule is higher than a priority of another candidate integration rule in the plurality of candidate integration rules.

6. The method according to any one of claims 1 to 5, wherein the method further comprises:
when the target integration rule indicates that the integration relationship is applicable to the source cloud service and the destination cloud service, providing second prompt information that is to be presented to the user.

7. The method according to any one of claims 1 to 6, wherein the method further comprises:
when the target integration rule indicates that the integration relationship is not applicable to the source cloud service and the destination cloud service, providing a target integration relationship that is to be presented to the user, wherein the target integration relationship is applicable to the source cloud service and the destination cloud service.

8. The method according to any one of claims 1 to 7, wherein the method further comprises:

obtaining a to-be-authenticated integration rule; and

after the integration rule is authenticated, determining the integration rule as one of the plurality of integration rules.

9. The method according to any one of claims 1 to 8, wherein the method further comprises:

obtaining a cloud integration architecture, wherein the cloud integration architecture comprises a plurality of cloud services and an integration relationship between the plurality of cloud services;

scoring the cloud integration architecture to obtain a scoring result; and

providing the scoring result that is to be presented to the user.

10. A cloud service integration apparatus, wherein the apparatus comprises:

an interaction module, configured to obtain an identity of a source cloud service, an identity of a destination cloud service, and an integration relationship that are specified by a user, wherein the integration relationship is used to restrict data communication between the source cloud service and the destination cloud service; and

a matching module, configured to determine a target integration rule from a plurality of integration rules based on the identity of the source cloud service, the identity of the destination cloud service, and the integration relationship, wherein

the interaction module is further configured to: when the target integration rule indicates that the integration relationship is not applicable to the source cloud service and the destination cloud service, provide first prompt information that is to be presented to the user.

11. The apparatus according to claim 10, wherein the interaction module is configured to:

provide an input interface that is to be presented to the user, wherein the input interface comprises icons of a plurality of cloud services;

in response to a select operation performed by the user on the icons of the plurality of cloud services in the input interface, determine the identity of the source cloud service and the identity of the destination cloud service; and

in response to an input operation performed by the user on the integration relationship in the input interface, determine the integration relationship input by the user.

12. The apparatus according to claim 10 or 11, wherein the interaction module is further configured to provide a rule presentation interface that is to be presented to the user, wherein the rule presentation interface comprises the plurality of integration rules.

13. The apparatus according to claim 12, wherein the interaction module is further configured to:

in response to a screening operation on a type of a cloud service, a type of an integration relationship, or a type of an execution strategy, determine at least one integration rule corresponding to the screening operation from the plurality of integration rules, wherein the execution strategy indicates an applicability degree between an integration relationship in an integration rule and both a source cloud service and a destination cloud service in the integration rule; and

adjust the plurality of integration rules presented in the rule presentation interface to the at least one integration rule.

14. The apparatus according to any one of claims 10 to 13, wherein the matching module is configured to:

select a plurality of candidate integration rules that match the identity of the source cloud service, the identity of the destination cloud service, and the integration relationship from the plurality of integration rules; and

determine the target integration rule from the plurality of candidate integration rules, wherein a priority of the target integration rule is higher than a priority of another candidate integration rule in the plurality of candidate integration rules.

15. The apparatus according to any one of claims 10 to 14, wherein the interaction module is further configured to: when the target integration rule indicates that the integration relationship is applicable to the source cloud service and the destination cloud service, provide second prompt information that is to be presented to the user.

16. The apparatus according to any one of claims 10 to 15, wherein the interaction module is further configured to: when the target integration rule indicates that the integration relationship is not applicable to the source cloud service and the destination cloud service, provide a target integration relationship that is to be presented to the user, wherein the target integration relationship is applicable to the source cloud service and the destination cloud service.

17. The apparatus according to any one of claims 10 to 16, wherein the apparatus further comprises:

an information management module, configured to: obtain a to-be-authenticated integration rule; and after the integration rule is authenticated, determine the integration rule as one of the plurality of integration rules.

18. The apparatus according to any one of claims 10 to 17, wherein

the interaction module is further configured to obtain a cloud integration architecture, wherein the cloud integration architecture comprises a plurality of cloud services and an integration relationship between the plurality of cloud services;
the apparatus further comprises:

a scoring module, configured to score the cloud integration architecture to obtain a scoring result; and
the interaction module is further configured to provide the scoring result that is to be presented to the user.

19. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 9.

20. A computer-readable storage medium, comprising computer program instructions, wherein when the computer program instructions are executed by a computing device cluster, the computing device cluster performs the method according to any one of claims 1 to 9.

21. A computer program product comprising instructions, wherein when the instructions are run by a computing device cluster, the computing device cluster is enabled to perform the method according to any one of claims 1 to 9.

FIG. 1

| User 200 | Client 103 | Interaction module 101 | Matching module 102 |
|---|---|---|---|

S201: An identity of a source cloud service, an identity of a destination cloud service, and an integration relationship

S202: The identity of the source cloud service, the identity of the destination cloud service, and the integration relationship

S203: Determine a target integration rule from a plurality of integration rules based on the identity of the source cloud service, the identity of the destination cloud service, and the integration relationship

S204: The target integration rule

S205: Present first prompt information (the integration relationship is not applicable to the source cloud service and the destination cloud service)

S206: Present second prompt information (the integration relationship is applicable to the source cloud service and the destination cloud service)

FIG. 2

| Cloud service | Editing box 1 | Editing box 2 | Editing box 3 |
|---|---|---|---|
| Cloud service 1 Cloud service 2 Cloud service 3 ... Cloud service n | Cloud service 1 (source cloud service) → Integration relationship a → Cloud service 2 (destination cloud service) | | |

FIG. 3

Integration rule:

| Source cloud service | Database cloud service |
|---|---|
| Destination cloud service | Cloud data replication service |
| Integration relationship | Incremental data synchronization |
| Execution strategy | Preferred |
| Priority | 1 |
| Prompt information | XXXXXX |

FIG. 4

Integration rule:

| | |
|---|---|
| Source cloud service | Database cloud service |
| Destination cloud service | Cloud data migration service |
| Integration relationship | Incremental data synchronization |
| Execution strategy | Forbidden |
| Priority | 1 |
| Prompt information | XXX |

FIG. 5

Rule maintenance interface

Maintenance information

**Upload integration rules** ⊕

| Integration relationship | Source cloud service | Destination cloud service | Execution strategy | Priority | Prompt information |
|---|---|---|---|---|---|
| Integration relationship x | Cloud service a | Cloud service b | Forbidden | 1 | XXXXX |

**Delete integration rules** ⊕

| Integration relationship | Source cloud service | Destination cloud service | Execution strategy | Priority | Prompt information |
|---|---|---|---|---|---|
| Integration relationship y | Cloud service c | Cloud service d | Preferred | 5 | XXXX |

**Modify integration rules** ⊕

| Integration relationship | Source cloud service | Destination cloud service | Execution strategy | Priority | Prompt information |
|---|---|---|---|---|---|
| Integration relationship z | Cloud service e | Cloud service f | Alternative | 1 | XXXXXXX |

Description

Description | Upload attachments

( Save )　( Submit )　( Cancel )

FIG. 6

| User 200 | Client 103 | Interaction module 101 | Matching module 102 | Scoring module 105 | Information management module 104 |

S701: Present a rule presentation interface
(a plurality of integration rules)

S702: Present an input interface

S703: A cloud integration architecture
(identities of a plurality of cloud services
and an integration relationship)

S704: An identity of a source cloud service, an identity of a destination cloud service, and an integration relationship

S705: A plurality of integration rules

S706: Determine a target integration rule from the plurality of integration rules based on the identity of the source cloud service, the identity of the destination cloud service, and the integration relationship

S707: The target integration rule

| TO FIG. 7B | TO FIG. 7B | TO FIG. 7B | TO FIG. 7B | TO FIG. 7B | TO FIG. 7B |

FIG. 7A

EP 4 503 577 A1

CONT.
FROM
FIG. 7A

CONT.
FROM
FIG. 7A

CONT.
FROM
FIG. 7A

CONT.
FROM
FIG. 7A

CONT.
FROM
FIG. 7A

CONT.
FROM
FIG. 7A

S708: Present first prompt information
(the integration relationship is not
applicable to the source cloud service and
the destination cloud service)

S709: Present second prompt information
(the integration relationship is applicable
to the source cloud service and the
destination cloud service)

S710: The cloud
integration architecture

S711: Score the cloud
integration architecture to
obtain a scoring result

S712: The scoring
result

S713: Present the
scoring result

FIG. 7B

Rule presentation interface

| | | |
|---|---|---|
| Cloud service a | ✓ Preferred → | Cloud service b |
| Integration relationship: | Integration relationship I | |
| Priority: | 1 | |

Prompt information: XXX

Times cited: 54

| | | |
|---|---|---|
| All cloud services | ⊘ Forbidden → | Cloud service d |
| Integration relationship: | Integration relationship II | |
| Priority: | 1 | |

Prompt information: XXXXX

Times cited: 50

| | | |
|---|---|---|
| Cloud service e | ✓ Preferred → | Cloud service f |
| Integration relationship: | Integration relationship III | |
| Priority: | 1 | |

Prompt information: XX

Times cited: 36

...                                        ...

FIG. 8

| Integration relationship | All | Integration relationship 1 | | Integration relationship 2 | | Integration relationship 3 | | More ▼ |
|---|---|---|---|---|---|---|---|---|
| Source cloud service | All | Cloud service a | Cloud service b | Cloud service c | Cloud service d | Cloud service e | | More ▼ |
| Destination cloud service | All | Cloud service a | Cloud service b | Cloud service c | Cloud service d | Cloud service e | | More ▼ |
| Execution strategy | All | Preferred | Alternative | Not recommended | Forbidden | | | |

Cloud service a ——⊘ Preferred——▶ Cloud service b

Integration relationship: Integration relationship I

Priority: 1

Prompt information:   XXX

Times cited:   54

All cloud services ——⊘ Forbidden——▶ Cloud service d

Integration relationship: Integration relationship II

Priority: 1

Prompt information:   XXXXX

Times cited:   50

Cloud service e ——⊘ Preferred——▶ Cloud service f

Integration relationship: Integration relationship III

Priority: 1

Prompt information:   XX

Times cited:   36

•••                                                      •••

FIG. 9

| Cloud service | Editing box | Editing box 1 | Editing box 2 |
|---|---|---|---|

Cloud service 1

Cloud service 2

Cloud service 3

...

Cloud service n

Cloud integration architecture

Cloud service 1 → Integration relationship I → Cloud service 2 → Integration relationship II → Cloud service 3 → Integration relationship III → Cloud service 4

Integration relationship VI

Integration relationship IV

Cloud service 6 ← Integration relationship V ← Cloud service 5

FIG. 10

EP 4 503 577 A1

Processor 1110

Communication interface 1130

Bus 1140

Interaction module 101

Information management module 104

Matching module 102

Scoring module 105

Memory 1120

Computing device 1100

FIG. 11

Computing device cluster 1200

| Processor 1110 | Communication interface 1130 |

Bus 1140

Interaction module 101

Information management module 104

Matching module 102

Scoring module 105

Memory 1120

Computing device 1100

FIG. 12

EP 4 503 577 A1

FIG. 13

EP 4 503 577 A1

Network

Processor 1110

Communication interface 1130

Bus 1140

Interaction module 101

Matching module 102

Memory 1120

Computing device 1100A

Communication interface 1130

Processor 1110

Bus 1140

Information management module 104

Scoring module 105

Memory 1120

Computing device 1100B

FIG. 14

## INTERNATIONAL SEARCH REPORT

| | International application No. |
|---|---|
| | **PCT/CN2022/134682** |

**A. CLASSIFICATION OF SUBJECT MATTER**

H04L 67/10(2022.01)i

According to International Patent Classification (IPC) or to both national classification and IPC

**B. FIELDS SEARCHED**

Minimum documentation searched (classification system followed by classification symbols)

IPC:H04L 67/-; H04L 29/-; H04L 12/-; G06F 16/-

Documentation searched other than minimum documentation to the extent that such documents are included in the fields searched

Electronic data base consulted during the international search (name of data base and, where practicable, search terms used)

CNABS, CNTXT, ENTXTC, CJFD, CNKI, 百度, BAIDU: 云服务, 组件, 源, 目的, 目标, 关联, 绑定, 集成, 规则, 策略, 匹配, 查找, 查询, 同步, 授权, 访问控制; VEN, ENTXT, IEEE: cloud service, element, destination, object, target, source, map, correlation, relevant, bind, strategy, rule, match, search, synchronize, access control, authorization

**C. DOCUMENTS CONSIDERED TO BE RELEVANT**

| Category* | Citation of document, with indication, where appropriate, of the relevant passages | Relevant to claim No. |
|---|---|---|
| X | US 2018219866 A1 (SERVICENOW INC.) 02 August 2018 (2018-08-02) description, paragraphs [0043]-[0107] | 1, 6, 8, 10, 15, 17, 19-21 |
| A | CN 101710893 A (DALIAN NCL GROUP CO., LTD.) 19 May 2010 (2010-05-19) entire document | 1-21 |
| A | CN 111611305 A (TENCENT TECHNOLOGY (SHENZHEN) CO., LTD.) 01 September 2020 (2020-09-01) entire document | 1-21 |
| A | CN 113382071 A (BEIJING YUANLI FUTURE TECHNOLOGY CO., LTD.) 10 September 2021 (2021-09-10) entire document | 1-21 |
| A | CN 113965579 A (HUAWEI TECHNOLOGIES CO., LTD.) 21 January 2022 (2022-01-21) entire document | 1-21 |
| A | US 2015365291 A1 (INTERNATIONAL BUSINESS MACHINES CORP.) 17 December 2015 (2015-12-17) entire document | 1-21 |

☐ Further documents are listed in the continuation of Box C. ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 February 2023** | **24 February 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/134682**

| Patent document cited in search report | | | Publication date (day/month/year) | Patent family member(s) | | | Publication date (day/month/year) |
|---|---|---|---|---|---|---|---|
| US | 2018219866 | A1 | 02 August 2018 | CA | 2989591 | A1 | 02 July 2018 |
| | | | | CA | 2989591 | C | 31 March 2020 |
| | | | | US | 10505937 | B2 | 10 December 2019 |
| CN | 101710893 | A | 19 May 2010 | CN | 101710893 | B | 13 March 2013 |
| CN | 111611305 | A | 01 September 2020 | | None | | |
| CN | 113382071 | A | 10 September 2021 | CN | 113382071 | B | 06 September 2022 |
| CN | 113965579 | A | 21 January 2022 | WO | 2022001376 | A1 | 06 January 2022 |
| US | 2015365291 | A1 | 17 December 2015 | US | 9426034 | B2 | 23 August 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210451785